# EUROPÄISCHE PATENTANMELDUNG

(11) **EP 2 463 128 A1**
(43) Veröffentlichungstag der Anmeldung: **13.06.2012**
(21) Anmeldenummer: 10290644.3
(22) Anmeldetag: 09.12.2010
(51) Int. Cl.: B60H 1/00

(54) **Klimaanlage, insbesondere für ein Kraftfahrzeug**

(71) Anmelder: Behr France Rouffach SAS, 68250 Rouffach (FR)
(72) Erfinder: Tonnelier Pierre, 68240 Kaysersberg (FR)
(74) Vertreter: Grauel, Andreas

(57) **Zusammenfassung**

Die Erfindung betrifft eine Klimaanlage, insbesondere für ein Kraftfahrzeug, umfassend einen Verdampfer (2) und eine Heizeinrichtung (4), wobei eine dem Verdampfer (2) nachgeordnete Mischklappe (5) die aus dem Verdampfer (2) ausströmende Luftströmung umlenkt.

Bei einer Klimaanlage, welche klein und kompakt ausgeführt ist und trotzdem maximale Strömungsquerschnitte für die Luftströmung aufweist, ist die Mischklappe (5) bogenförmig gestaltet.

## Beschreibung

Die Erfindung betrifft eine Klimaanlage, insbesondere für ein Kraftfahrzeug, umfassend einen Verdampfer und eine Heizeinrichtung, wobei eine, dem Verdampfer nachgeordnete Mischklappe die aus dem Verdampfer ausströmende Luftströmung umlenkt.

Übliche Klimaanlagen, welche als Heiz-/Klimasysteme bezeichnet werden, umfassen einen Verdampfer und eine Heizeinrichtung. Dabei durchströmt eine Luftströmung den Verdampfer und wird dann mit Hilfe einer oder mehrerer Mischklappen in Richtung eines Lüftungsauslasses der Klimaanlage gelenkt, was als Kühlmodus bezeichnet wird. In einem Heizmodus wird die Luftströmung alternativ vom Verdampfer in Richtung der Heizeinrichtung zur Erwärmung der Luft gelenkt und anschließend über dem Mischraum den Lüftungsauslässen zugeführt. Bei der heute gewünschten kompakten Ausgestaltung der Klimaanlage sind die Strömungsquerschnitte am Verdampferausgang stark beeinträchtigt. Diese Beeinträchtigung wird noch dadurch erhöht, dass eine oder mehrere Mischklappen verwendet werden, die die Luftströmung nach Durchströmen des Verdampfers weiterleiten, wobei eine Beschränkung dieser Strömungsquerschnitte sowie ein vergrößerter Druckverlust der Klimaanlage erfolgt. Als Beispiel für die derzeit verwendeten Mischklappen soll hier eine Schmetterlingsklappe angeführt werden, deren konstruktive Ausbildung die Strömungsquerschnitte für die Luftströmung weiter verringert.

Der Erfindung liegt somit die Aufgabe zu Grunde, eine Klimaanlage anzugeben, welche trotz kompakten Aufbaus ausreichend große Strömungsquerschnitte für die Umlenkung der Luftströmung innerhalb der Klimaanlage aufweist.

Erfindungsgemäß wird die Aufgabe dadurch gelöst, dass die Mischklappe bogenförmig gestaltet ist. Dies hat den Vorteil, dass eine Lenkung der Luftströmung sowohl im Heizmodus als auch im Kühlmodus bei Gewährleistung der maximalen Strömungsquerschnitte möglich ist. Durch die bogenförmige Mischklappe wird ein Druckverlustes innerhalb der Klimaanlage verringert, was eine Reduzierung des durch die Klimaanlage verursachten Schallpegels nach sich zieht. Diese bogenförmige Mischklappe ist außerdem sehr kostengünstig und einfach herstellbar.

Vorteilhafterweise ist die bogenförmige Mischklappe zwischen Verdampfer und Heizeinrichtung angeordnet. Somit erlaubt bzw. unterbindet die bogenförmige Mischklappe den Zutritt des aus dem Verdampfer ausströmenden Luftstromes zur Heizeinrichtung. Durch diese Anordnung lässt sich die Klimaanlage noch kompakter gestalten.

In einer Ausgestaltung ist die Heizeinrichtung nahe einem oberen Bereich des Verdampfers angeordnet. Dadurch wird der Innenraum der Klimaanlage weiter optimiert, was der Gestaltung von besonders kleinen und kompakten Klimaanlagen weiter entgegen kommt.

In einer Variante ist die bogenförmige Mischklappe zwischen einem oberen, ersten Ende oder einem unteren, zweiten Ende des Verdampfers und einem annähernd tiefsten Punkt der Heizeinrichtung angeordnet. Unabhängig von der Position der bogenförmigen Mischklappe wird immer ein maximaler Strömungsquerschnitt für die aus dem Verdampfer austretende Luftströmung gewährleistet.

In einer Weiterbildung ist die bogenförmige Mischklappe am annähernd tiefsten Punkt der Heizeinrichtung beweglich, vorzugsweise drehbar, gelagert. Durch diese drehbare Lagerung wird die bogenförmige Mischklappe ganz komfortabel in die gewünschte Position zwischen Verdampfer und Heizeinrichtung bewegt, so dass ein Heizmodus, ein Lüftungsmodus oder ein dritter Modus, welcher Zwischenstellungen der bogenförmigen Mischklappe erlaubt, einfach eingestellt werden kann.

In einer Ausführungsform erstreckt sich die bogenförmige Mischklappe in einem Kühlmodus zwischen dem oberen, ersten Ende des Verdampfers und dem annähernd tiefsten Punkt der Heizeinrichtung, wobei die aus dem Verdampfer ausströmende Luftströmung unterhalb der Heizeinrichtung in einen Mischraum geführt ist. Dabei wird der aus dem Verdampfer austretenden Luftströmung der Zutritt zur Heizeinrichtung vollständig verwehrt. Es wird ein Kanal unterhalb der Heizeinrichtung geöffnet, durch welchen die Luftströmung aus dem Verdampfer ausströmen kann.

Alternativ erstreckt sich die bogenförmige Mischklappe in einem Heizmodus zwischen dem unteren, zweiten Ende des Verdampfers und dem annähernd tiefsten Punkt der Heizeinrichtung, wobei die aus dem Verdampfer ausströmende Luftströmung durch die Heizeinrichtung in den Mischraum geführt wird. Bei dieser Ausgestaltung wird ein Kanal zur Heizeinrichtung geöffnet, wobei die Heizeinrichtung vollständig von der aus dem Verdampfer austretenden Luftströmung umspült wird. Auch bei dieser Ausgestaltung wird ein maximaler Strömungsquerschnitt gewährleistet.

In einer Weiterbildung ist der Mischraum der Heizeinrichtung nachgeordnet. Durch die aufeinanderfolgende Anordnung Verdampfer, Heizeinrichtung und Mischraum wird eine besonders kleine und kompakte Einrichtung der Klimaanlage gewährleistet, welche trotzdem große Strömungsquerschnitte für die aus dem Verdampfer austretende Luftströmung aufweist. In dem Mischraum werden insbesondere bei dem Zwischenmodus der Klimaanlage thermische Gleichgewichte zwischen kalter und warmer Luft hergestellt. Die Positionierung der Heizeinrichtung in Verbindung mit der Positionierung verschiedener Kanäle zum Durchfluss der Kalt- bzw. Warmluft im Kühl- bzw. Heizmodus führt zu Temperaturunterschieden innerhalb des Mischraumes.

Insbesondere weist der Mischraum mehrere Luftauslässe auf, welche in unterschiedliche Richtungen gerichtet sind. Durch die Temperaturunterschiede im Mischraum werden entsprechend temperierte Luftströme durch die unterschiedlichen Luftauslässe geführt, wobei der gewünschte Klimatisierungseffekt des jeweiligen Luftauslasses berücksichtigt wird.

Ferner umfasst der Mischraum einen Entfrosterluftauslass, einen Belüftungsluftauslass und einen Fußraumluftauslass, welche in unterschiedliche Bereiche des Kraftfahrzeuges gerichtet sind.

Die Erfindung lässt zahlreiche Ausführungsformen zu. Eine davon soll anhand der in der Zeichnung dargestellten Figuren näher erläutert werden.

Es zeigt:
- Figur 1:: ein Ausführungsbeispiel der erfindungsgemäßen Klimaanlage im Kühlmodus,
- Figur 2:: ein Ausführungsbeispiel der erfindungsgemäßen Klimaanlage im Heizmodus.

Gleiche Merkmale sind mit gleichen Bezugszeichen gekennzeichnet.

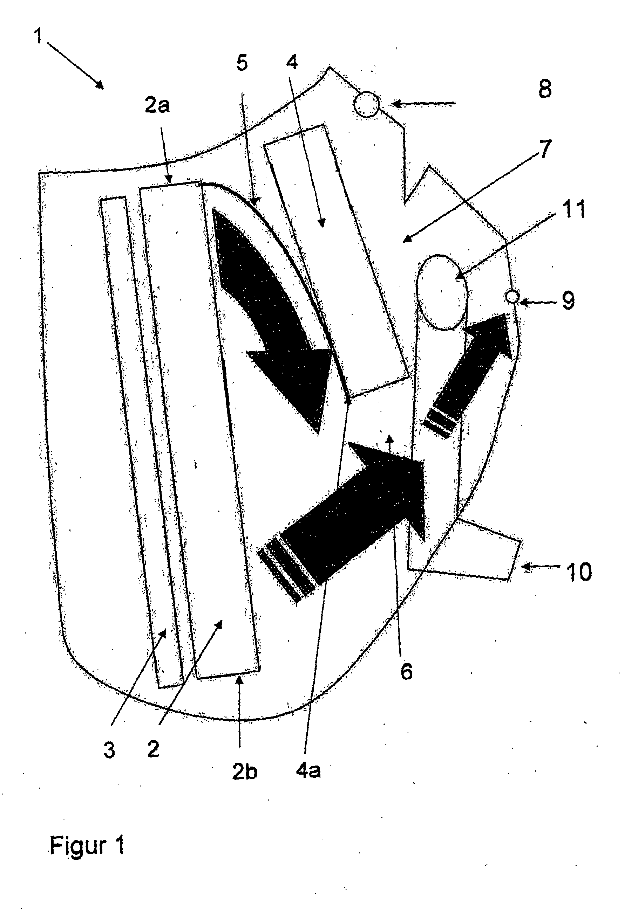

Figur 1 zeigt eine Klimaanlage 1, welche einen Verdampfer 2 aufweist, dem ein Filter 3 vorgelagert ist. Der Verdampfer 2 erstreckt sich dabei vollständig entlang der Breite der Klimaanlage 1. Im oberen Bereich des Verdampfers 2 liegt diesem der Heizkörper 4 gegenüber, welcher nur annähernd halb so lang ist wie der Verdampfer 2. Verdampfer 2 und Heizeinrichtung 4 erstrecken sich annähernd in dieselbe Richtung.

Zwischen dem Verdampfer 2 und der, dem Verdampfer in ihrer Längserstreckung gegenüber liegenden Heizeinrichtung 4 erstreckt sich eine bogenförmige Mischklappe 5. Diese bogenförmige Mischklappe 5 ist zwischen einem oberen Ende 2a des Verdampfers 2 und einem unteren Punkt 4a der Heizeinrichtung 4 angeordnet.

Hinter der Heizeinrichtung 4 liegt der Mischraum 7, welcher über einen Strömungskanal 6 mit dem Luftraum vor dem Verdampfer 2 verbunden ist. Der Mischraum 7 weist mehrere verschiedene Luftauslässe auf. Bei diesen Luftauslässen handelt es sich um den Entfrosteriuftauslass 8, den Belüftungsluftauslass 9 sowie einen vorderen Fußraumluftauslass 11 und einen hinteren Fußraumluftauslass 10. Diese Luftauslässe 8, 9, 10, 11 sind in einen Innenraum eines Kraftfahrzeuges gerichtet, wobei der Entfrosterluftauslass 8 die Frontscheibe des Kraftfahrzeuges anströmt, während der Belüftungsluftauslass 9 den zentralen Innenraum des Kraftfahrzeuges belüftet und der vordere Fußraumluftauslass 11 im Pedalbereich des Innenraumes des Kraftfahrzeuges austritt. Der hintere Fußraumluftauslass 10 führt die Luftströmung in den Bereich des Sitzes.

In Figur 1 ist die bogenförmige Mischklappe 5 so zwischen Verdampfer 2 und Heizeinrichtung 4 angeordnet, dass ein Kühlmodus der Klimaanlage 1 ausgeführt ist. Die bogenförmige Mischklappe 5 deckt dabei die Heizeinrichtung 4 vollständig ab. Dabei wird die aus dem Verdampfer 2 ausströmende Luftströmung, welche durch Pfeile charakterisiert ist, von der Mischklappe 5 in Richtung des unteren Endes 2b des Verdampfers 2 und des Strömungskanales 6 der Klimaanlage 1 gelenkt, wobei die Luftströmung direkt auf den Belüftungsluftauslass 9 geführt wird, welcher die gekühlte Luftströmung in den zentralen Innenraum des Kraftfahrzeuges weiterleitet.

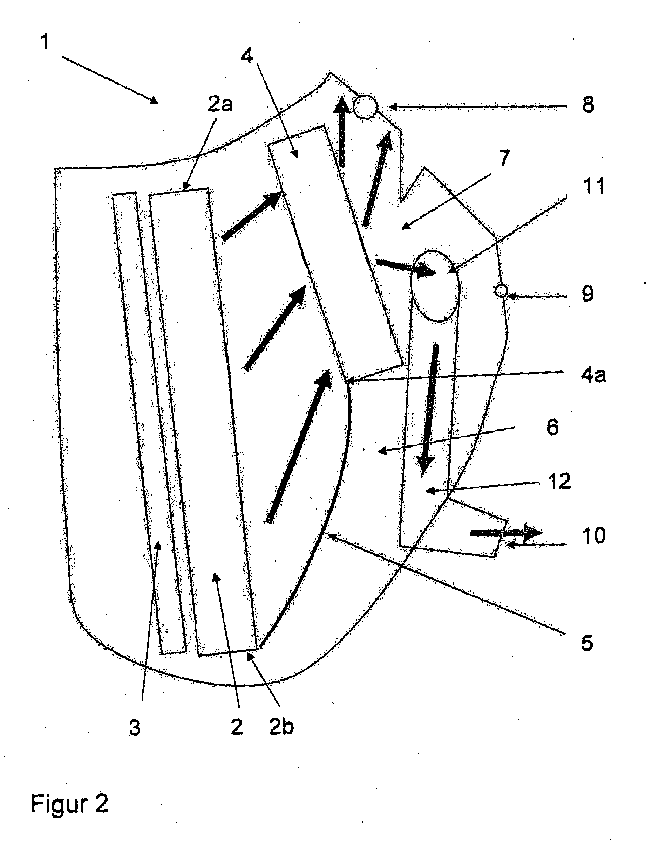

Die bogenförmige Mischklappe 5 ist an dem untersten Punkt 4a der Heizeinrichtung 4 drehbar gelagert. Dabei wird bei einer Umschaltung der Klimaanlage 1 von einem Kühlmodus in einen Heizmodus diese bogenförmige Mischklappe 5 um diesen Punkt 4a geschwenkt, wodurch die in Figur 2 dargestellte Anordnung der bogenförmigen Mischklappe 5 erreicht wird.

Diese bogenförmige Mischklappe 5 erstreckt sich gemäß Figur 2 zwischen dem tiefsten Punkt 4a der Heizeinrichtung 4 und dem unteren, zweiten Ende 2b des Verdampfers 2. Diese Stellung der bogenförmigen Mischklappe 5 bewirkt, dass die aus dem Verdampfer 2 austretende Luftströmung die Heizeinrichtung 4 vollständig umspült. Dadurch wird die Luft aufgewärmt. Bei dieser Konstellation wird vorteilhafterweise der Entfrosterluftauslass 8 und der vordere Fußraumauslass 11 durchströmt. Durch einen weiteren Strömungskanal 12 wird die aus der Heizeinrichtung 4 austretende Luftströmung durch den vorderen Fußraumluftauslass 11 zum hinteren Fußraumluftauslass 10 weitergeleitet. Aufgrund der Lagerung der bogenförmigen Mischluftklappe 5 wird ein sehr einfaches Umschalten vom Heizmodus in den Kühlmodus und umgekehrt möglich.

Sowohl in der Figur 1 als auch in der Figur 2 wird durch die bogenförmige Mischklappe 5 jeweils der maximale Strömungsquerschnitt innerhalb der Klimaanlage 1 realisiert. Diese einfache Ausgestaltung ermöglicht einen sehr kleinen und kompakten Aufbau der Klimaanlage, welcher neben dem maximalen Strömungsquerschnitt auch eine Verringerung des Schallpegels mit sich führt, da diese bauliche Gestaltung eine Verringerung von Druckverlust ten innerhalb der Klimaanlage erlaubt.

Die bogenförmige Mischklappe kann jederzeit auch Stellungen zwischen den in Figur 1 und 2 dargestellten Positionen einnehmen und so einen dritten Zwischenmodus ermöglichen, bei welchem im Mischraum 7 die vom Verdampfer 2 ausgegebene Luftströmung, welche an der Heizeinrichtung 4 vorbei geführt wird, mit der durch die Heizeinrichtung 4 hindurch geströmten Luftströmung gemischt wird.

Die vorgeschlagene erfinderische Lösung kann sowohl für symmetrische als auch für asymmetrische Klimaanlagen eingesetzt werden.

## Patentansprüche

1. Klimaanlage, insbesondere für ein Kraftfahrzeug, umfassend einen Verdampfer (2) und eine Heizeinrichtung (4), wobei eine dem Verdampfer (2) nach geordnete Mischklappe (5) die aus dem Verdampfer (2) ausströmende Luftströmung umlenkt, **dadurch gekennzeichnet, dass** die Mischklappe (5) bogenförmig gestaltet ist.

2. Klimaanlage nach Anspruch 1, **dadurch gekennzeichnet, dass** die bogenförmige Mischklappe (5) zwischen Verdampfer (2) und Heizeinrichtung (4) angeordnet ist.

3. Klimaanlage nach Anspruch 1 oder 2, **dadurch gekennzeichnet, dass** die Heizeinrichtung (4) nahe eines oberen Bereiches des Verdampfers (2) angeordnet ist.

4. Klimaanlage nach Anspruch 2 oder 3, **dadurch gekennzeichnet, dass** die bogenförmige Mischklappe (5) zwischen einem oberen ersten Ende (2a) oder einem unteren zweiten Ende (2b) des Verdampfers (2) und einem annähernd tiefsten Punkt (4a) der Heizeinrichtung (4) angeordnet ist.

5. Klimaanlage nach Anspruch 4, **dadurch gekennzeichnet, dass** die bogenförmige Mischklappe (5) am annähernd tiefsten Punkt (4a) der Heizeinrichtung (4) beweglich, vorzugsweise drehbar, gelagert ist.

6. Klimaanlage nach Anspruch 4 oder 5, **dadurch gekennzeichnet, dass** sich die bogenförmige Mischklappe (5) in einem Kühlmodus zwischen dem oberen ersten Ende (2a) des Verdampfers (2) und dem annähernd tiefsten Punkt (4a) der Heizeinrichtung (4) erstreckt, wobei die aus dem Verdampfer (2) ausströmende Luftströmung unterhalb der Heizeinrichtung (4) in einen Mischraum (7) geführt ist.

7. Klimaanlage nach Anspruch 4 oder 5, **dadurch gekennzeichnet, dass** sich die bogenförmige Mischklappe (5) in einem Heizmodus zwischen dem unteren, zweiten Ende (2b) des Verdampfers (2) und dem annähernd tiefsten Punkt (4a) der Heizeinrichtung (4) erstreckt, wobei die aus dem Verdampfer (2) ausströmende Luftströmung durch die Heizeinrichtung (4) in den Mischraum (7) geführt wird.

8. Klimaanlage nach Anspruch 6 oder 7, **dadurch gekennzeichnet, dass** der Mischraum (7) der Heizeinrichtung (4) nachgeordnet.

9. Klimaanlage nach Anspruch 5, 6 oder 7, **dadurch gekennzeichnet, dass** der Mischraum (7) mehrere Luftauslässe (8, 9, 10, 11) aufweist, welche in unterschiedliche Richtungen gerichtet sind.

10. Klimaanlage nach Anspruch 9, **dadurch gekennzeichnet, dass** der Mischraum (7) einen Entfrosterluftauslass (8), einen Belüftungsluftauslass (9) und einen Fußraumluftauslass (10, 11) umfasst, welche in unterschiedliche Bereiche des Kraftfahrzeuges gerichtet sind.
